# EUROPEAN PATENT SPECIFICATION

(11) **EP 3 448 935 B1**
(45) Date of publication and mention of the grant of the patent: **13.04.2022**
(21) Application number: 17720773.5
(22) Date of filing: 28.04.2017
(51) Int. Cl.: C08L 71/12, C08K 3/00, C08K 5/00, C08K 7/02, C08L 81/02, C08L 81/06, C08L 71/00

(54) **COMPATIBILIZED POLYMER COMPOSITIONS**
KOMPATIBILISIERTE POLYMERZUSAMMENSETZUNGEN
COMPOSITIONS DE POLYMERE COMPATIBILISEES

(30) Priority: 29.04.2016 US 201662329522 P; 08.09.2016 EP 16187800
(43) Date of publication of application: 06.03.2019
(73) Proprietor: Solvay Specialty Polymers USA, LLC, Alpharetta, Georgia 30005-3914 (US)
(72) Inventor: JEOL, Stéphane, Cumming GA 30041 (US); MOMTAZ, Maryam, Alpharetta Georgia 30022 (US); BUSHELMAN, Corinne, Cumming Georgia 30040 (US); SATTICH, William E, Cumming Georgia 30040 (US)
(74) Representative: Benvenuti, Federica
(86) International application number: PCT/EP2017/060220
(87) International publication number: WO 2017/186923

(56) References cited:
- EP-A1- 0 635 548
- EP-A2- 0 266 791
- US-A- 5 723 525

## Description

### RELATED APPLICATIONS

This application claims priority to U.S. provisional application No. 62/329,522 - filed April 29, 2016 - and to European patent application No. 16187800.4 - filed September 8th, 2016.

### FIELD OF THE INVENTION

The present invention relates to high-performance compatibilized polymer compositions including a poly(para-phenylene sulfide) (PPS) and at least one poly(aryl ether sulfone) (PAES).

### BACKGROUND

Polymers may be blended to achieve new compositions with desirable properties; however, the vast majority of polymers are immiscible with each other. Attempts to blend polymers often results in heterogeneous multi-phase compositions when the polymers are immiscible with each other. Such compositions may exhibit several thermal transition temperatures (Tg, Tm), usually exhibit poor mechanical properties, and suffer from delamination and/or aesthetical defects.

Indeed, the mechanical properties and ease of processing of a particular blend depend on the degree of compatibility of the polymer components. The main polymer component is usually referred to as the continuous phase or matrix, whereas the minor polymer component is typically defined as the dispersed phase. The degree of compatibility can be characterized by the dimensions of the dispersed phase in the continuous phase and the level of adhesion between the matrix and the dispersed phase. Certain highly immiscible blends are impossible to extrude in normal operating conditions due to a high die swell and are therefore not commercially available. PPS is known to have very good chemical resistance and low melt viscosity, and PAESs are known to have excellent mechanical properties and good thermal stability. Therefore, it would be desirable to blend these polymers to achieve a combination of their properties. However, blends of PPS and PAES are not always very compatible, exhibiting poor tensile properties in some instances because of the existence of large domains of the individual polymers in blends of these polymers and because of a poor adhesion between the phases.

Accordingly, a need exists for new blends of PPS and PAESs having increased compatibility.

EP266791 A2 discloses compositions comprising a poly(arylene sulfide), a sulfone polymer and a reinforcing material such as glass fibers useful as molding compositions for thick-walled articles. The use in the composition of lithium carbonate or a hydrotalcite is disclosed as mold corrosion inhibitor.

US5723525 discloses molding materials which contain : from 60 to 99.8% by weight of polyarylene ethers, from 0.001 to 0.2% by weight of a carbonate or bicarbonate of an alkali metal and from 0 to 40% by weight of additives or processing assistants or their mixtures.

EP635548A1 discloses thermoplastic resin compositions comprising (a) polyphenylene sulphide resin (PPS), (b) a polyphenylene ether resin (PPE), (c) a specific organophosphorus compound, and (d) a basic compound.( None of these documents disclose a composition according to claim 1. **BRIEF**

### DESCRIPTION OF THE FIGURES

FIG. **1** shows transmission electron microscopy (TEM) images of the compositions of Example 1 (FIG. **1A**) and Comparative Example 11 (FIG. **1B**).
FIG. **2** shows TEM images of the compositions of Example 2 (FIG. **2A**) and Comparative Example 12 (FIG. **2B**).
FIG. **3** shows TEM images of the compositions of Example 3 (FIG. **3A**) and Comparative Example 13 (FIG. **3B**).
FIG. **4** shows TEM images of the compositions of Example 4 (FIG. **4A**) and Comparative Example 14 (FIG. **4B**).
FIG. **5** shows TEM images of the compositions of Example 5 (FIG. **5A**) and Example 6 (FIG. **5B**).
FIG. **6** shows TEM images of the compositions of Example 7 (FIG. **6A**) and Example 8 (FIG. **6B**).
FIG. **7** shows TEM images of the compositions of Example 9 (FIG. **7A**) and Example 10 (FIG. **7B**).
FIG. **8** shows TEM images of the compositions of Example 15 (FIG. **8A**) and Comparative Example 18 (FIG. **8B**).
FIG. **9** shows TEM images of the compositions of Example 17 (FIG. **8A**) and Comparative Example 21 (FIG. **8B**).
FIG. **10** shows a TEM image of the composition of Comparative Example 27.
FIG. **11** shows a TEM image of the composition of Comparative Example 8.
FIG. **12** shows a TEM image of the composition of Comparative Example 29.
FIG. **13** shows a TEM image of the composition of Example 30.

### DETAILED DESCRIPTION OF PREFERRED EMBODIMENTS

Applicants have now surprisingly discovered that it is possible to prepare polymer blends with increased compatibility, including blends of highly immiscible polymers such as poly(para-phenylene sulfide) (PPS) and poly(aryl ether sulfone) (PAES).

Exemplary embodiments are directed to a polymer composition including PPS, at least one PAES, and about 0.05 to about 2 wt.% of at least one alkali metal carbonate comprising sodium carbonate, potassium carbonate or a combination thereof, based on the total weight of polymers in the composition. Preferably, the weight ratio of the PPS to the at least one PAES ranges from 0.2 to 20.

In some embodiments, the polymer composition is free or substantially free of solvents, that-is-to-say that the composition does not comprise solvent and comprises solvent(s) in an amount not exceeding 2 wt.% (based on the total weight of the composition), for example less than 1 wt.%, less than 0.5 wt.% or less than 0.1 wt.%.

In some embodiments, the polymer composition is free or substantially free of a polyetherimide (PEI), that-is-to-say that the composition does not comprise PEI and comprises PEI in an amount not exceeding 2 wt.% (based on the total weight of the composition), for example less than 1 wt.%, less than 0.5 wt.% or less than 0.1 wt.%.

In some embodiments, the polymer composition is free or substantially free of an epoxy, that-is-to-say that the composition does not comprise epoxy and comprises epoxy in an amount not exceeding 2 wt.% (based on the total weight of the composition), for example less than 1 wt.%, less than 0.5 wt.% or less than 0.1 wt.%.

For the sake of clarity, throughout the present application:
- the term "alkali metal carbonate" includes an alkali metal carbonate and any reagent from which the alkali metal carbonate can be derived *in situ* during processing at high temperature, for example alkali metal bicarbonate.
- the term "solvent" means a liquid in which at least one of the polymers in the polymer composition will at least partially dissolve;
- "substantially free of solvent" means less than 2 wt.% of solvent, for example less than 1 wt.%, less than 0.5 wt.% or less than 0.1 wt.% (based on the total weight of the composition);
- "substantially simultaneously" means within 30 seconds;
- "substantially free of a polyetherimide (PEI)" means less than 2 wt.% of polyetherimide (PEI), for example less than 1 wt.%, less than 0.5 wt.% or less than 0.1 wt.% (based on the total weight of the composition);
- "substantially free of an epoxy" means less than 2 wt.% of epoxy, for example less than 1 wt.%, less than 0.5 wt.% or less than 0.1 wt.% (based on the total weight of the composition);
- "substantially free of rPAES" means less than 2 wt.% of rPAES, based on the total weight of the polymers in the polymer composition;
- "substantially free of die swell" means less than 5% die swell; and
- the term "halogen" includes fluorine, chlorine, bromine, and iodine, unless indicated otherwise.

Generally, the PPS and PAES have a weight average molecular weight ranging from 5,000 g/mol to 150,000 g/mol, preferably from 10,000 g/mol to 100,000 g/mol.

In the present application:
- any description, even though described in relation to a specific embodiment, is applicable to and interchangeable with other embodiments of the present disclosure;
- where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components; any element or component recited in a list of elements or components may be omitted from such list; and
- any recitation herein of numerical ranges by endpoints includes all numbers subsumed within the recited ranges as well as the endpoints of the range and equivalents.

### Poly(para-phenylene sulfide) (PPS)

As used herein, a "poly(*para*-phenylene sulfide) (PPS)" denotes any polymer of which at least 50 mol % of the recurring units are recurring units (R_{PPS}) of formula (L):

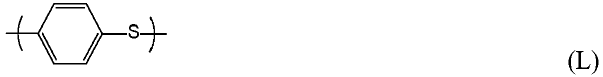

Preferably at least 60 mol %, 70 mol %, 80 mol %, 90 mol %, 95 mol %, 99 mol %, and most preferably all of the recurring units in the PPS are recurring units (R_{PPS}).

PPS is manufactured and sold under the trade name Ryton^{®} PPS by Solvay Specialty Polymers USA, LLC.

The PPS may be acid washed or not acid washed. In some embodiments, the PPS is acetic acid washed PPS.

### Poly(aryl ether sulfone)s (PAES)

For the purpose of the present invention, a "poly(aryl ether sulfone) (PAES)" denotes any polymer of which at least 50 mol % of the recurring units are recurring units (R_{PAES}) of formula (K): 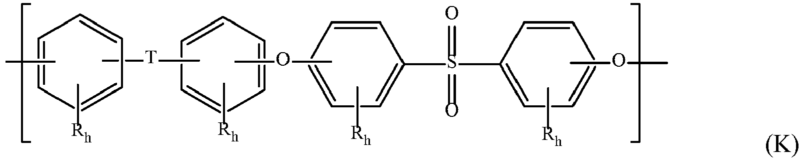 where:
(i) each R, equal to or different from each other, is selected from a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium;
(ii) each h, equal to or different from each other, is an integer ranging from 0 to 4; and
(iii) T is selected from the group consisting of a bond, a sulfone group [-S(=O)₂₋], and a group -C(Rⱼ)(Rₖ)-, where Rⱼ and Rₖ, equal to or different from each other, are selected from a hydrogen, a halogen, an alkyl, an alkenyl, an alkynyl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium. Rⱼ and Rₖ are preferably methyl groups.

Preferably at least 60 mol %, 70 mol %, 80 mol %, 90 mol %, 95 mol %, 99 mol %, and most preferably all of recurring units in the PAES are recurring units (R_{PAES}).

In a preferred embodiment, the PAES is a polyphenylsulfone (PPSU). As used herein, a "polyphenylsulfone (PPSU)" denotes any polymer of which more than 50 mol % of the recurring units are recurring units of formula (K'-A):

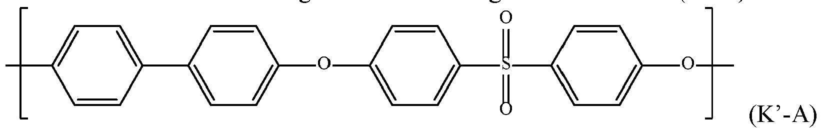

Preferably at least 60 mol %, 70 mol %, 80 mol %, 90 mol %, 95 mol %, 99 mol %, and most preferably all of the recurring units in the PPSU are recurring units of formula (K'-A).

PPSU can be prepared by known methods and is notably available as RADEL^{®} PPSU from Solvay Specialty Polymers USA, L.L.C.

In some embodiments, the PAES is a polyethersulfone (PES). As used herein, a "polyethersulfone (PES)" denotes any polymer of which at least 50 mol % of the recurring units are recurring units of formula (K'-B):

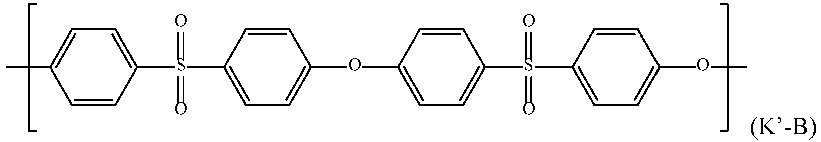

Preferably at least 60 mol %, 70 mol %, 80 mol %, 90 mol %, 95 mol %, 99 mol %, and most preferably all of the recurring units in the PES are recurring units of formula (K'-B).

PES can be prepared by known methods and is notably available as VERADEL^{®} PESU from Solvay Specialty Polymers USA, L.L.C.

In some embodiments, the PAES is a polysulfone (PSU). As used herein, a "polysulfone (PSU)" denotes any polymer of which at least 50 mol % of the recurring units are recurring units of formula (K'-C):

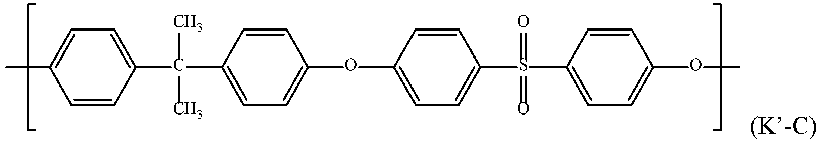

Preferably at least 60 mol %, 70 mol %, 80 mol %, 90 mol %, 95 mol %, 99 mol %, and most preferably all of the recurring units in the PSU are recurring units of formula (K'-C).

PSU can be prepared by known methods and is available as UDEL^{®} PSU from Solvay Specialty Polymers USA, L.L.C.

Excellent results were obtained when the PAES was selected from the group consisting of PPSU, PES, PSU, or a combination thereof.

### The Alkali Metal Carbonate

The polymer composition includes at least one alkali metal carbonate comprising sodium carbonate, potassium carbonate or a combination thereof, in an amount ranging from about 0.05 to about 2 wt.%, about 0.1 to about 1.8 wt.%, about 0.1 to about 1.6 wt.%, about 0.1 to about 1.5 wt.%, about 0.1 to about 1.3 wt.%, about 0.1 to about 1.0 wt.%, about 0.1 to about 0.8 wt.%, about 0.1 to about 0.5 wt.% based on the total weight of polymers in the polymer composition. In some embodiments, the amount of alkali metal carbonate ranges from about 0.1 to about 0.5 wt.%, about 0.2 to about 0.5 wt.%, about 0.4 to about 0.5 wt.% based on the total weight of polymers in the polymer composition. In some embodiments, the amount of alkali metal carbonate is less than or equal to 1.0 wt.%, 0.9 wt.%, 0.8 wt.%, 0.7 wt.%, 0.6 wt.%, 0.5 wt.%, 0.4 wt.%, 0.3 wt.%, 0.2 wt.%, 0.1 wt.% based on the total weight of polymers in the polymer composition.

The alkali metal carbonate is selected from sodium carbonate or potassium carbonate. Potassium carbonate is preferred. Mixtures of two or more alkali metal carbonates may be used.

In some aspects, the particle size D50 (median diameter or the medium value of the particle size distribution) ranges from 2 microns to 1000 microns, preferably from 2 to 500 microns, most preferably from 3 to 200 microns.

### Optional Reactive Polymers

The PPS and the at least one PAES may be present in either a reactive form (i.e. a reactive polymer) or a non-reactive form.

In their reactive form, the polymers include at least 5, at least 10, at least 15, preferably at least 20, preferably at least 50 microequivalents per gram (µeq/g) of hydroxyl (-OH) or thiol (-SH) end groups. One example of such a reactive polymer is reactive polyethersulfone (rPES), which is available from Solvay Specialty Polymers USA, LLC, as VIRANTAGE^{®} PESU.

In some embodiments, the polymer composition includes at least one reactive poly(aryl ether sulfone) (rPAES) in addition to the PPS and at least one PAES. The rPAES is preferably selected from a reactive polysulfone (rPSU), a reactive polyethersulfone (rPES) and a reactive polyphenylsulfone (rPPSU).

Preferably, the total amount of rPAES in the polymer composition ranges from 0 to 60 wt.%, 1 to 50 wt.%, 5 to 30 wt.%, 5 to 25 wt.%, 5 to 20 wt.%, 5 to 15 wt.%, most preferably about 10 wt.%, based on the total weight of the polymers in the polymer composition.

In their non-reactive form, the PPS and PAES include one or more non-reactive end groups. The non-reactive end groups are preferably -Cl, -F, or -O-CH₃. Preferably the non-reactive polymers include at least 20, preferably more than 50 microequivalents per gram (µeq/g) of non-reactive end groups.

In some aspects, the polymer composition may be free or substantially free of rPAESs.

The PPS is preferably present in its reactive form. The abbreviation "PPS" as used herein includes both reactive and non-reactive poly(para-phenylene sulfide) (PPS).

### Optional Reinforcing Fillers

A large selection of reinforcing fillers may be added to the polymer composition. They are preferably selected from fibrous and particulate fillers. A fibrous reinforcing filler is considered herein to be a material having length, width and thickness, wherein the average length is substantially larger than both the width and thickness. Preferably, such a material has an aspect ratio, defined as the average ratio between the length and the smallest of the width and thickness of at least 5. Preferably, the aspect ratio of the reinforcing fibers is at least 10, more preferably at least 20, still more preferably at least 50. The particulate fillers have an aspect ratio of at most 5, preferably at most 2.

Preferably, the reinforcing filler is selected from mineral fillers, such as talc, mica, titanium dioxide, kaolin, calcium carbonate, calcium silicate, magnesium carbonate; glass fibers; carbon fibers, boron carbide fibers; wollastonite; silicon carbide fibers; boron fibers, graphene, carbon nanotubes (CNT), and the like.

The reinforcing filler may be present in the polymer composition in an amount of at least 5 wt. %, preferably at least 10 wt. %, more preferably at least 15 wt. %, based on the total weight of the polymer composition.

The reinforcing filler is also preferably present in an amount of at most 60 wt. %, more preferably at most 50 wt. %, still more preferably at most 40 wt. %, based on the total weight of the polymer composition.

Preferably, the amount of the reinforcing filler ranges from 0.1 wt. % to 60 wt. %, more preferably from 5 wt. % to 50 wt. %, still more preferably from 10 wt. % to 40 wt. % of the polymer composition. According to some embodiments, the polymer composition is free of a fibrous filler. Alternatively the polymer composition may be free of a particulate filler. In certain specific embodiments, the polymer composition is preferably free of reinforcing fillers.

### Additional Optional Ingredients

In some aspects, the polymer composition consists or consists essentially of the PPS, the at least one PAES and the alkali metal carbonate; however, in other aspects, the polymer composition may include one or more additional additives.

The polymer composition may further optionally include other ingredients such as a colorant such as a dye and/or a pigment such as titanium dioxide, zinc sulfide, zinc oxide, ultraviolet light stabilizers, heat stabilizers, antioxidants such as organic phosphites and phosphonites, acid scavengers, processing aids, nucleating agents, lubricants, flame retardants, a smoke-suppressing agents, an anti-static agents, anti-blocking agents, and/or conductivity additives such as carbon black.

When one or more other ingredients are present, their total weight is preferably less than 20 wt.%, less than 10 wt.%, less than 5 wt.% and most preferably less than 2 wt.%, based on the total weight of polymer composition.

It has surprisingly been discovered that organic and inorganic acid components having a pKa < 7.5, preferably < 7, are able to stabilize the melt viscosity of the polymer composition of the invention. Non-limiting examples of organic and inorganic components having a pKa < 7.5 are sodium hydrogen phosphate (NaH₂PO₄₎, monosodium citrate, sodium hydrogen oxalate, and sodium hydrogen phthalate. Inorganic components, such as, for example, NaH₂PO₄, having a pKa < 7 are preferred. Excellent results were obtained with organic and inorganic components having a pKa as follows : 2.5< pKa <7.5, preferably 3< pKa <7 . The organic or inorganic acid component having a pKa < 7.5 may be present in an amount ranging from 0.05 wt.% to 5 wt.%, preferably from 0.1 wt.% to 2 wt.%, more preferably from 0.2 wt.% to 1 wt.%, based on the total weight of polymers in the polymer composition.

### Exemplary Polymer Blends

Preferred polymer compositions are shown in Table 1. Each polymer composition may include other ingredients in addition to those listed. Each preferred polymer composition also includes an alkali metal carbonate, comprising potassium or sodium carbonate, in an amount ranging from 0.05 to about 2 wt.% , or in another amount as disclosed herein. Each preferred polymer composition may optionally include an acid component as described herein.

**Table 1**

| **Polymer Composition** | **Polymer (A)** | **Polymer (B)** | **Polymer (C)** |
|---|---|---|---|
| 1 | PPS | PSU | -- |
| 2 | PPS | PES | -- |
| 3 | PPS | PPSU | -- |
| 7 | PPS | rPSU | -- |
| 8 | PPS | rPES | -- |
| 9 | PPS | rPPSU | -- |
| 10 | PPS | PSU | rPSU |
| 11 | PPS | PES | rPES |
| 12 | PPS | PPSU | rPPSU |

In the polymer composition, the concentration of each of the PPS, the PAES, and the rPAES is independently selected from 0 wt.%, preferably at least 1 wt.%, 2 wt.%, 5 wt.%, 10 wt.%, 15 wt.%, 20 wt.%, 25 wt.%, 30 wt.%, 35 wt.%, 40 wt.%, 45 wt.%, 50 wt.%, 55 wt.%, 60 wt.%, 65 wt.%, 70 wt.%, 75 wt.%, 80 wt.%, 85 wt.%, 90 wt.%, 95 wt.%, 98 wt.%, 99 wt.% of the total weight of polymers in the polymer composition.

In some embodiments, the polymer composition includes about 85 wt.%, preferably about 75 wt.%, more preferably about 65 wt.%, and most preferably about 50 wt.% of PPS or PAES and about 15 wt.%, preferably about 25 wt.%, more preferably about 35 wt. %, most preferably about 50 wt.%, respectively, of the other of the PPS or PAES, based on the total weight of the polymers in the polymer composition.

In some aspects, the polymer composition includes (i) from 15 wt.% to 85 wt.%, preferably 25 to 75 wt. %, 30 to 70 wt.%, 40 to 60 wt.%, 45 to 55 wt.%, most preferably about 45% wt. % of the PPS, (ii) from 85 to 15 wt.%, preferably 75 to 25 wt.%, 70 to 30 wt.%, 60 to 40 wt.%, 55 to 45 wt.%, most preferably about 45 wt.% of the PAES, and (iii) from 1 wt.% to 20 wt.%, preferably about 10 wt.% of the rPAES, based on the total weight of the polymers in the polymer composition.

Preferably, the weight ratio of the PPS to the at least one PAES ranges from 0.2 to 20, 0.3 to 15, 0.4 to 10, 0.5 to 5, and most preferably 1 to 3.

In some embodiments, the weight ratio of the PPS to the amount of the at least one PAES ranges from 0.5 to 5, preferably 1 to 3, and the polymer composition includes 0.15 to 0.4 wt.%, preferably 0.2 to 0.4 wt.% of the least one alkali metal carbonate, potassium or sodium carbonate, based on the total weight of polymers in the composition.

In some embodiments, the polymer composition comprises:
i) a PPS;
ii) a PPSU; and
iii) from about 0.05 to about 2 wt.% of at least one alkali metal carbonate comprising sodium carbonate, potassium carbonate or a combination thereof, based on the total weight of polymers in the composition,
wherein the weight ratio of PPS/PPSU ranges from 0.2 to 20.

### Exemplary Properties of the Polymer Composition

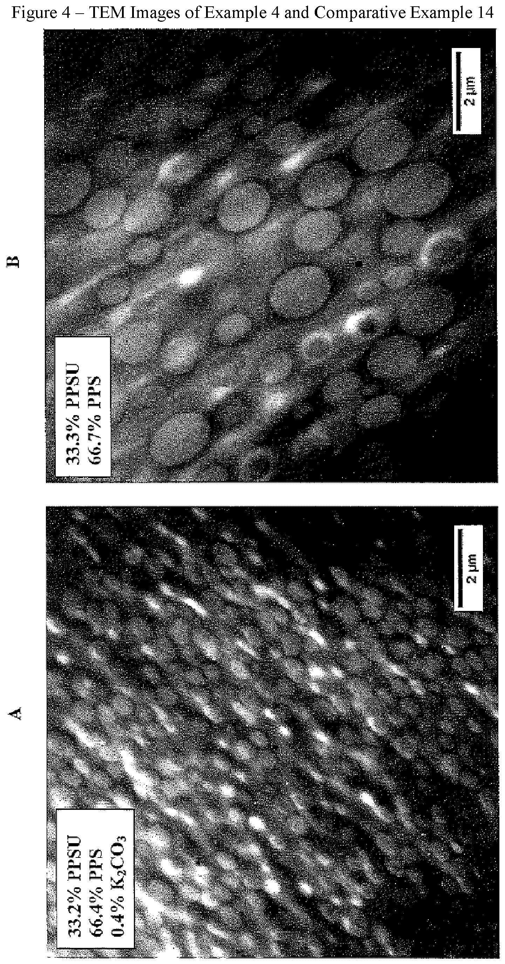

The polymer compositions of the present invention may include a dispersed phase that is dispersed in a continuous phase or matrix. An example of a dispersed phase is shown in FIG. **4A**.

In some embodiments, the average surface area per dispersed particle is preferably less than or equal to about 4 µm², about 3 µm², about 2 µm², about 1 µm², about 0.5 µm², about 0.25 µm². .

In some embodiments, the maximum diameter of particles of the dispersed phase is ≤ 3 µm, preferably ≤ 2 µm, ≤ 1 µm, ≤ 0.8 µm, ≤ 0.6 µm, ≤ 0.4 µm, most preferably ≤ 0.1 µm.

In alternative embodiments, the polymer blends may include co-continuous phases characterized by the presence of continuous ribbons of the polymer

components when viewed by transmission electron microscopy (TEM). In such embodiments, the average width of the ribbons is preferably less than or equal to about 3 µm, more preferably less than or equal to about 2 µm, where the average width is calculated by taking 10 random measurements of the ribbon width, discarding the longest and shortest measurements, and dividing the sum of the remaining measurements by 8.

In some embodiments, the polymer composition of the invention exhibits a Dynatup Impact total energy according to ASTM D3763 ranging from 25 to 50 ft-lbs.

The polymer composition may exhibit at least two different glass transition temperatures (Tg) corresponding to each of the at least two different polymers; however, these Tgs may be different (i.e. shifted) as compared with the Tgs of the same polymers when not in the polymer composition. In some embodiments, the difference between the respective Tgs in the polymer composition (the ΔTg) is at least 0.5 °C, preferably at least 1 °C, more preferably from 5 to 50 °C, even more preferably from 5 to 10°C.

In certain specific embodiments, the polymer composition is free or substantially free of die swell when the polymer composition is extruded as a melt from an extruder and the temperature of the melt ranges from 300 to 430 °C.

### Method of Making the Polymer Composition

In some embodiments, the invention includes a method of making the polymer compositions described herein by melt mixing i) a PPS, ii) at least one PAES, and iii) about 0.05 to about 2 wt.% of at least one alkali metal carbonate comprising sodium carbonate, potassium carbonate or a combination thereof, based on the total weight of polymers in the composition. Preferably the weight ratio of the PPS to the at least one PAES ranges from 0.2 to 20, preferably 0.3 to 15, 0.4 to 10, 0.5 to 5, and most preferably, 1 to 3. Preferably, the polymer composition is free or substantially free of solvent. The PPS and PAES may be independently reactive or non-reactive. The PPS is preferably a reactive polymer. The PPS may be acid washed or not acid washed.

The components of the mixture may be added or mixed in any order, in any amount or fraction their total amount, and may be mixed separately or simultaneously.

The preparation of the polymer composition can be carried out by any known melt-mixing process that is suitable for preparing thermoplastic molding compositions. Such a process may be carried out by heating the polymers above the melting temperature of the semi-crystalline polymers to form a melt of the polymers and/or above the Tg of the amorphous polymers. In some embodiments, the processing temperature ranges from about 250-450°C, preferably from about 280-420°C. Preferably, the processing temperature is at least 15°C, preferably at least 50°C, preferably at least 100°C, preferably at least 150°C greater than the glass transition temperature (Tg) of the highest Tg polymer in the polymer composition and/or at least 15°C greater than the melting temperature (Tm) of the highest Tm polymer in the polymer composition.

In the some aspects of the process for the preparation of the polymer composition, the components for forming the polymer composition are fed to the melt-mixing apparatus and melt-mixed in that apparatus. Suitable melt-mixing apparatuses are, for example, kneaders, Banbury mixers, single-screw extruders, and twin-screw extruders. Preferably, use is made of an extruder fitted with means for dosing the desired components to the extruder, either to the extruder's throat or to the melt. Preferably the extruder is equipped with one or more ports allowing dosing to the melt at different barrels during the extrusion process.

The components may be fed simultaneously as a powder mixture or granule mixture, also known as dry-blend, or may be fed separately.

In some embodiments, all of the polymers and the alkali metal carbonate are added to the throat of the extruder, preferably simultaneously or substantially simultaneously. In other aspects, one or more of the polymers may be added with the alkali metal carbonate to the throat of the extruder, and one or more other polymers is subsequently added to the melt at a barrel of the extruder. For example, the PPS and a rPAES, preferably an rPES, may be added with the alkali metal carbonate to the throat of the extruder, and the PAES may be added subsequently at a downstream barrel of the extruder. When added, the acid component may be added at the throat of the extruder, or to the melt at any barrel of the extruder. Preferably, the acid component is added to the melt at a downstream barrel such that it contacts the melt shortly before the melt is extruded. Preferably, the acid component is added at a time after the addition of the alkali metal carbonate.

In exemplary embodiments, multiple-pass extrusion may be performed. In multiple-pass extrusion, extrudate from a first pass is reintroduced into the extruder, preferably at the throat, such that it passes through the extruder a second time. In multiple-pass extrusion, two, three, four, or more passes may be performed, and the polymers, alkali metal carbonate, acid component, or other ingredients may be added at any point on the extruder line in any pass. For example, the PPS may be added to the throat of the extruder with the alkali metal carbonate, the extrudate from a first pass may then be recycled to the extruder with addition of the at least one PAES, and the acid component can be added toward the end of the second pass. Alternatively, the extrudate resulting from the second pass may be recycled for a third pass during which, for example, an acid component and/or filler material may be added to the melt prior to extrusion into a final product.

In some aspects, at least two passes may be performed, and components may be added to the extrudate and/or a process performed (for example, mixing) on the extrudate before it is recycled to the extruder for one or more additional passes.

The extruder may be operated at any suitable speed. The extruder speed and the temperatures of the extruder barrels may be constant or varied. Preferably the extruder screw(s) are rotated at about 100 to about 900, preferably from about 200 to about 500 rpm; however, speed and temperature may be adjusted based on the particular polymer composition being blended.

The "total residence time" as used herein means the total time that the longest-residing component spends in the extruder, including multiple passes, if any. The total residence time preferably ranges from about 15 seconds to about 4 minutes, preferably from about 30 seconds to about 2 minutes.

The polymer compositions described herein are advantageously provided in the form of pellets, which may be used in injection molding or extrusion processes known in the art.

Exemplary embodiments are directed a method including:
(a1) contacting the PPS, the at least one PAES, and the alkali metal carbonate to form a first initial mixture;
(a2) contacting the PPS with the alkali metal carbonate to form a second initial mixture, and subsequently contacting the second initial mixture with the at least one PAES to form a second mixture;
(a3) contacting the at least one PAES with the alkali metal carbonate to form a third initial mixture, and subsequently contacting the third initial mixture with the PPS to form a third mixture; or
(a4) contacting the PPS and the at least one PAES to form a fourth initial mixture and subsequently contacting the fourth initial mixture with the alkali metal carbonate to form a forth mixture; and
(b) optionally contacting the first initial mixture, the second mixture, the third mixture, or the fourth mixture with the acid component as described herein.

In alternative embodiments, the method includes:
(a1) contacting the PPS, the at least one PAES, a rPAES and the alkali metal carbonate to form a first initial mixture;
(a2) contacting the PPS, the rPAES, and the alkali metal carbonate to form a second initial mixture, and subsequently contacting the second initial mixture with the at least one PAES to form a second mixture.
(a3) contacting the at least one PAES, the rPAES, and the alkali metal carbonate to form a third initial mixture, and subsequently contacting the third initial mixture with the PPS to form a third mixture; or
(a4) contacting the PPS, the at least one PAES, and the rPAES to form a fourth initial mixture, and subsequently contacting the fourth initial mixture with the alkali metal carbonate to form a forth mixture; and
(b) optionally contacting the first initial mixture, the second mixture, the third mixture, or the fourth mixture with the acid component as described herein.

In some embodiments, the method includes:
(a1) contacting the PPS, the at least one PAES, and the alkali metal carbonate to form a first initial mixture, and subsequently contacting the first initial mixture with a rPAES to form a first mixture;
(a2) contacting the PPS and the alkali metal carbonate to form a second initial mixture, and subsequently contacting the second initial mixture with the at least one PAES and the rPAES to form a second mixture;
(a3) contacting the at least one PAES and the alkali metal carbonate to form a third initial mixture, and subsequently contacting the third initial mixture with the PPS and the rPAES to form a third mixture; or
(a4)contacting the PPS and the at least one PAES to form a fourth initial mixture, and subsequently contacting the fourth initial mixture with the alkali metal carbonate and the rPAES to form a forth mixture; and
(b) optionally contacting the first mixture, the second mixture, the third mixture, or the fourth mixture with the acid component as described herein.

### Shaped Articles Including the Polymer Composition

Exemplary embodiments also include articles comprising the above-described polymer composition.

The articles may be made from the polymer composition using any suitable melt-processing method. In particular, they may be made by injection molding, extrusion molding, roto-molding, or blow-molding.

The polymer composition may be well suited for the manufacture of articles useful in a wide variety of end uses.

The invention will be herein after illustrated in greater detail in the following section by means of non-limiting examples.

Should the disclosure of any patents, patent applications, and publications which are incorporated herein by reference conflict with the description of the present application to the extent that it may render a term unclear, the present description shall take precedence.

### EXAMPLES

### Examples 1-10 and Comparative Examples 11-14

### Examples 1 - 10: Blends of PPSU and PPS including K₂CO₃

### Comparative Examples 11 - 14: Blends of PPSU and PPS without K₂CO₃

### Materials:

- Radel^{®} PPSU R-5900 NT from Solvay Specialty Polymers USA, LLC
- Ryton^{®} PPS QA200N from Solvay Specialty Polymers USA, LLC
- Ryton^{®} PPS QA250N from Solvay Specialty Polymers USA, LLC
- Ryton^{®} PPS QC160N from Solvay Specialty Polymers USA, LLC
- Ryton^{®} PPS QC220N from Solvay Specialty Polymers USA, LLC
- K₂CO₃, UNID EF-90

### Compounding:

The blends were compounded using a Coperion^{®} ZSK-26 co-rotating twin-screw extruder having an L/D ratio of 48:1 at 200-300 rpm and 12-18 kg/hr. Barrel temperature set points were 360°C for zones 1 through 6, 340°C for zones 7 through 12, and 360°C at the die.

### Measurements:

The melt viscosity was measured according to ASTM D5630 at 360°C and 400 1/sec.

The morphology of the blends was examined by transmission electron microscopy (TEM) to find a maximum diameter of the dispersed phase domains.

### Results:

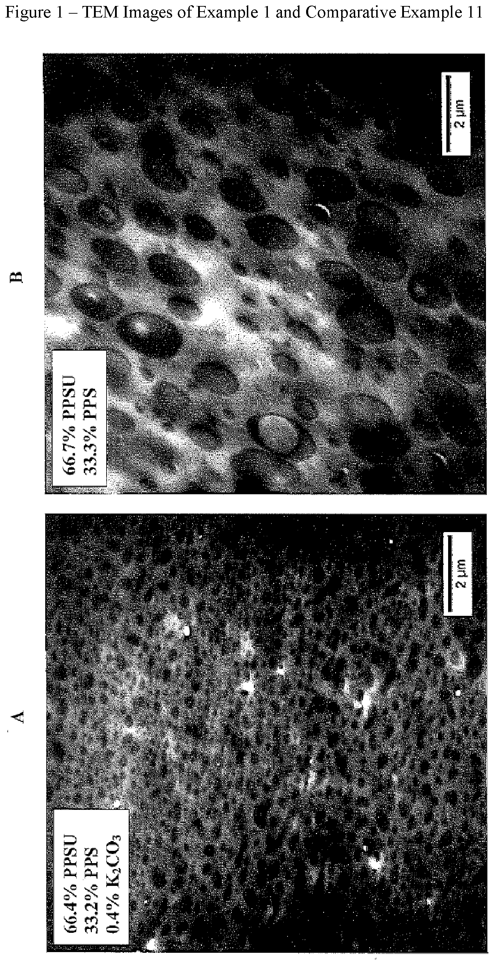

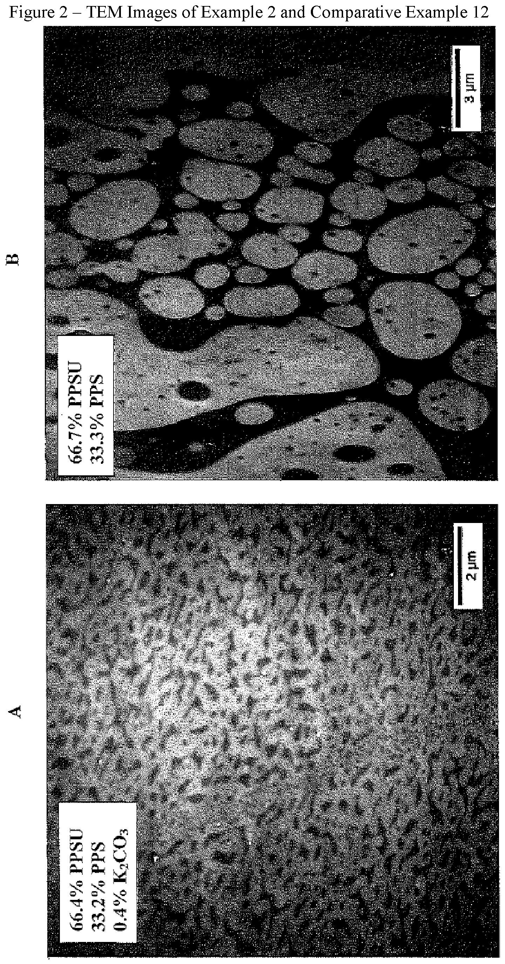

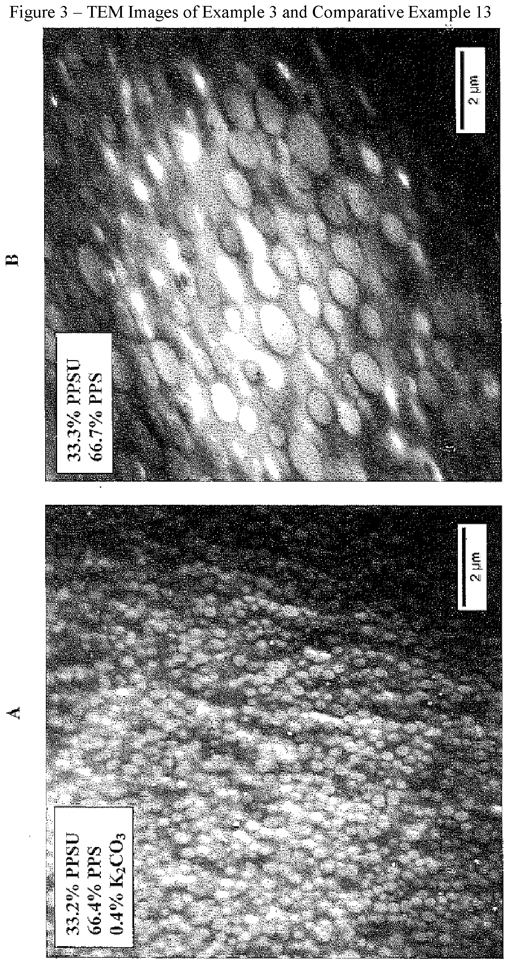

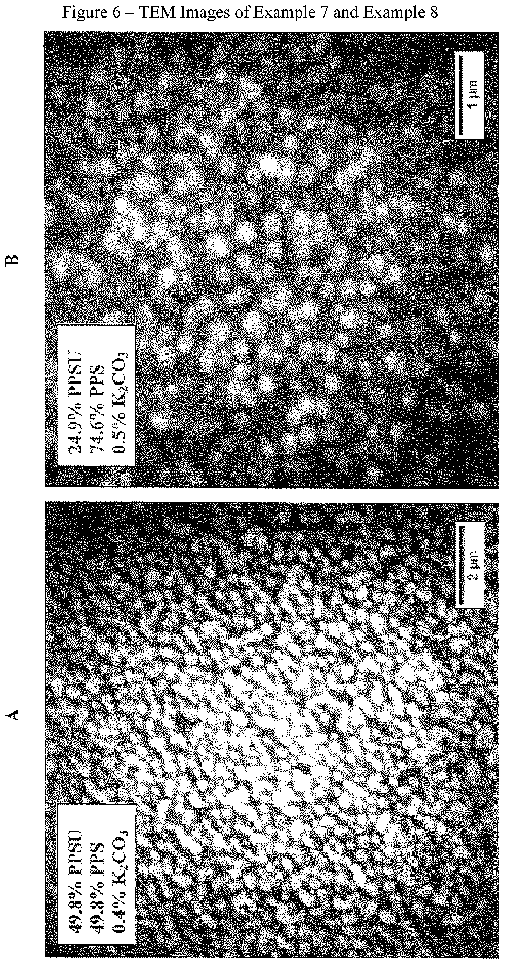

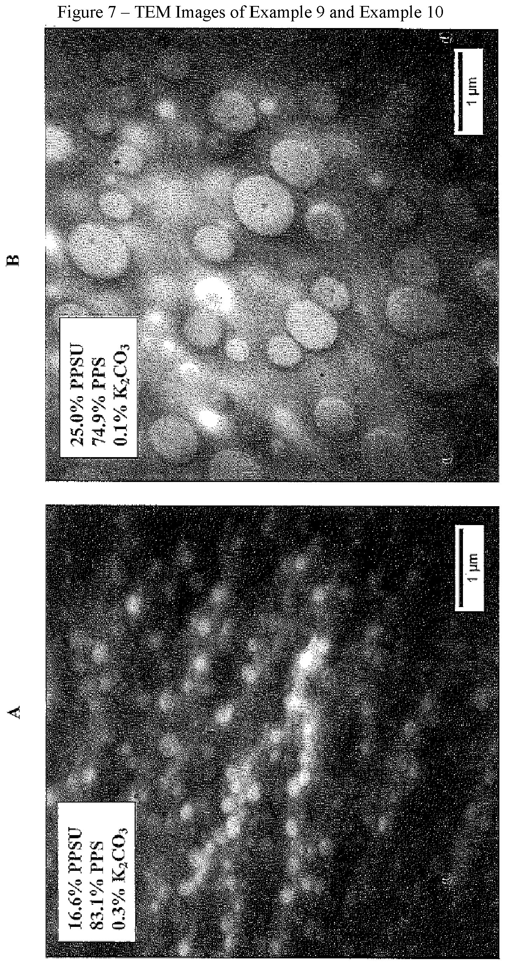

The blend compositions and measurements are shown below in Table 2. The morphology of the blends is shown in the TEM images of FIGS. **1 - 7****.**

**Table 2**

| Examples | R-5900 wt% | QA200N wt% | QA250N wt% | QC160N wt% | QC220N wt% | PPS/ PPSU | K₂CO₃ wt% | Viscosity Pa·sec | Blend Morphology | Maximum Domain Size |
|---|---|---|---|---|---|---|---|---|---|---|
| | | | | | | | | | | |
| E1 | 66.4 | 33.2 | | | | 0.5 | 0.4 | 1356 | PPSU Continuous | ≤0.5 µm |
| E2 | 66.4 | | 33.2 | | | 0.5 | 0.4 | 1087 | PPSU Continuous | ≤0.5 µm |
| E3 | 33.2 | | | 66.4 | | 2 | 0.4 | 515 | PPS Continuous | <0.5 µm |
| E4 | 33.2 | | | | 66.4 | 2 | 0.4 | 255 | PPS Continuous | ≤0.5 µm |
| | | | | | | | | | | |
| E5 | 33.2 | 66.4 | | | | 2 | 0.4 | 494 | PPS Continuous | <0.5 µm |
| E6 | 33.3 | 66.5 | | | | 2 | 0.2 | 479 | PPS Continuous | <0.5 µm |
| E7 | 49.8 | 49.8 | | | | 1 | 0.4 | 952 | PPS Continuous | <0.5 µm |
| E8 | 24.9 | 74.6 | | | | 3 | 0.5 | 329 | PPS Continuous | <0.5 µm |
| E9 | 16.6 | 83.1 | | | | 5 | 0.3 | 331 | PPS Continuous | <0.5 µm |
| E10 | 25.0 | 74.9 | | | | 3 | 0.1 | 313 | PPS Continuous | ≤1 µm |
| | | | | | | | | | | |
| C11 | 66.7 | 33.3 | | | | 0.5 | | 391 | PPSU Continuous | ≥2 µm |
| C12 | 66.7 | | 33.3 | | | 0.5 | | 308 | PPS Continuous | >5 µm |
| C13 | 33.3 | | | 66.7 | | 2 | | 216 | PPS Continuous | ≥2 µm |
| C14 | 33.3 | | | | 66.7 | 2 | | 141 | PPS Continuous | ≥2 µm |

Comparing Examples 1, 2, 3, and 4 with Comparative Examples 11, 12, 13, and 14, respectively (see also FIGS. **1 - 4**), it was unexpectedly found that adding 0.4 wt% K₂CO₃ markedly improved compatibility of the blends of PPSU and PPS, as evidenced by much smaller dispersed phase domain sizes (≤0.5 µm compared to ≥2 µm) and increased melt viscosity for the blends to which K₂CO₃ was added. Comparison of Examples 1 and 2 with Comparative Examples 11 and 12 shows that the improved compatibility is achieved with PPSU rich blends having PPSU as the continuous phase and PPS as the dispersed phase, whereas comparison of Examples 3 and 4 with Comparative Examples 13 and 14 shows that the improved compatibility is also achieved with PPS rich blends having PPS as the continuous phase and PPSU as the dispersed phase.

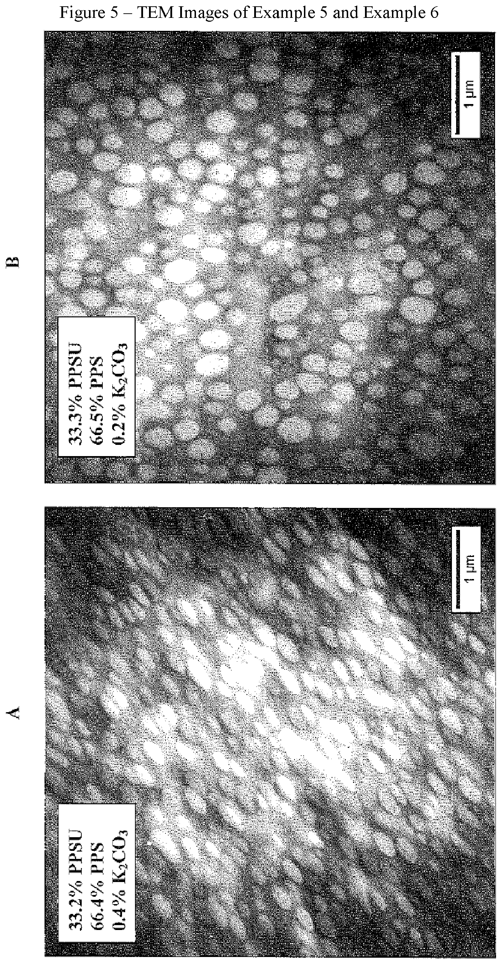

Examples 5 through 10 (FIGS. 5 -7) illustrate the effects of varying the PPS:PPSU ratio and the amount of K₂CO₃.

### Examples 15-18 and Comparative Examples 19-22

Examples 15 - 18: Blends of PPSU, PPS, and K₂CO₃ where the PPS was washed with acetic acid.

Comparative Examples 19 - 22: Blends of PPSU, PPS, and K₂CO₃ where the PPS was not washed with acetic acid.

### Materials:

- Radel^{®} PPSU R-5900 NT from Solvay Specialty Polymers USA, LLC
- Ryton^{®} PPS QA250N from Solvay Specialty Polymers USA, LLC; acetic acid washed
- Ryton^{®} PPS QC220N from Solvay Specialty Polymers USA, LLC; calcium acetate washed
- Ryton^{®} PPS PR34 from Solvay Specialty Polymers USA, LLC; water washed
- K₂CO₃ UNID EF-90

### Compounding and Measurements

The blends were compounded as in Example 1.

Measurements of melt viscosity and morphology were made as in Example 1.

### Results:

The blend compositions and measurements are shown below in Table 3.

**Table 3**

| Examples | R-5900 wt% | PPS wt% | PPS | PPS Wash | PPS/ PPSU | K₂CO₃ wt% | Viscosity Pa·sec | Blend Morphology | Maximum Domain Size |
|---|---|---|---|---|---|---|---|---|---|
| | | | | | | | | | |
| E15 | 66.4 | 33.2 | QA250N | AcOH | 0.5 | 0.4 | 1087 | PPSU Continuous | ≤0.5 µm |
| E16 | 49.8 | 49.8 | QA250N | AcOH | 1 | 0.4 | 628 | PPS Continuous | ≤0.5 µm |
| E17 | 33.2 | 66.4 | QA250N | AcOH | 2 | 0.4 | 303 | PPS Continuous | 0.25 µm |
| | | | | | | | | | |
| C18 | 66.4 | 33.2 | QC220N | Ca(OAc)₂ | 0.5 | 0.4 | 697 | PPS Continuous | ≥2 µm |
| C19 | 49.8 | 49.8 | QC220N | Ca(OAc)₂ | 1 | 0.4 | 475 | PPS Continuous | 1.0 µm |
| C20 | 33.2 | 66.4 | QC220N | Ca(OAc)₂ | 2 | 0.4 | 255 | PPS Continuous | 0.5 µm |
| C21 | 33.2 | 66.4 | PR34 | Water | 2 | 0.4 | 155 | PPS Continuous | >1 µm |

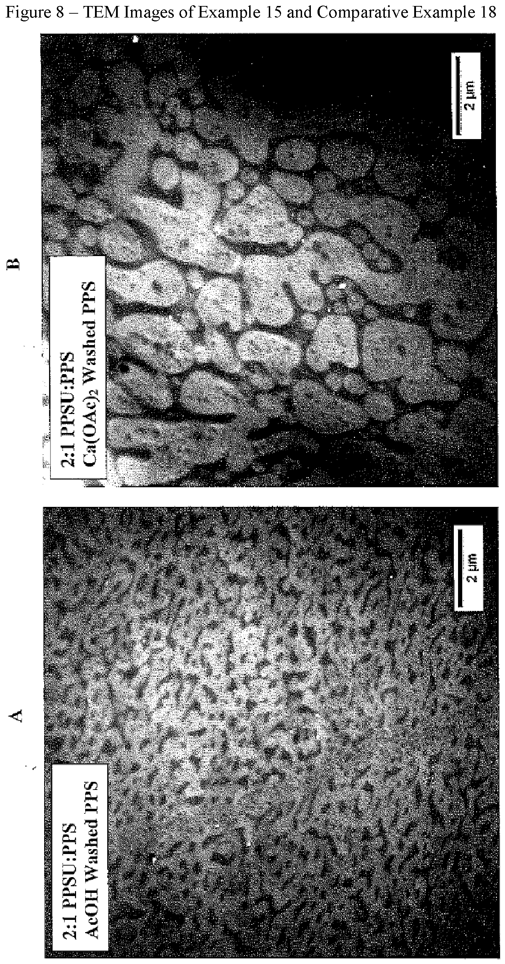

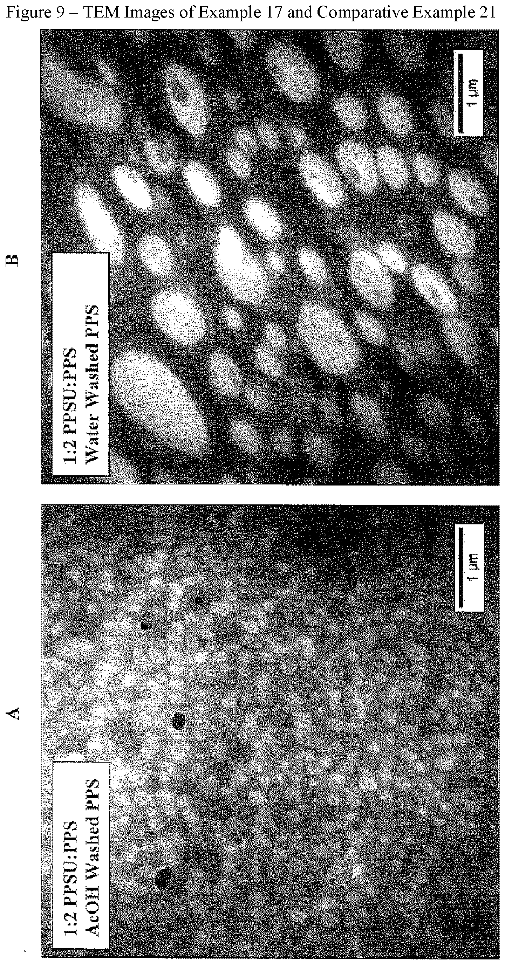

Comparing Examples 15, 16, and 17 with Comparative Examples 18, 19, 20, and 21 (see also FIGS. **8** **and** **9**), it can be seen that using a PPS polymer that was washed with acetic acid unexpectedly improved compatibility of the blends of PPSU and PPS, as evidenced by smaller dispersed phase domain sizes for the blends using a PPS polymer that had been contacted with acetic acid. In each case, the maximum dispersed phase domain sizes for blends using PPS polymers that were washed with water or calcium acetate were surprisingly larger than maximum dispersed phase domain sizes for blends using PPS polymer that was washed with acetic acid.

### Examples 22-26

Comparative Example 22: Blend of PPS/PES.

Examples 23-27: Blends of PPS/PES/K₂CO₃.

Compositions are described in Table 4.

### Materials:

- Veradel^{®} PESU 3300 ULT from Solvay Specialty Polymers USA, LLC
- Ryton^{®} PPS QA200N from Solvay Specialty Polymers USA, LLC
- K₂CO₃ LH-90 from Howard Industries, Inc.

### Compounding:

The compositions of Table 4 were subjected to melt compounding using a 26 mm diameter Coperion^{®} ZSK-26 co-rotating partially intermeshing twin screw extruder having an L/D ratio of 48:1. The barrel sections 2 through 12 and the die were heated to set point temperatures as follows:
Barrels 2-6: 360 °C
Barrels 7-12: 350 °C
Die: 360 °C

In each case, the resins and additives were fed at barrel section 1 and at barrel section 5 using gravimetric feeders at throughput rates in the range 30-40 lb/hr. The extruder was operated at screw speeds of around 200 RPM. Vacuum was applied at barrel zone 10 with a vacuum level of about 27 inches of mercury. A single-hole die was used for all the compounds and the molten polymer strand exiting the die was cooled in a water trough and then cut in a pelletizer.

### Injection Molding:

Injection molding was performed on the polymer compositions to produce 3.2 mm (0.125 in) thick ASTM tensile and flexural specimens and 4×4×0.125 in plaques for mechanical property testing. Type I tensile ASTM specimens and 4×4×0.125 in. plaques were injection molded using the following approximate temperature conditions on the barrel and mold:
Rear zone: 680 °F
Middle zone: 680 °F
Front zone: 700 °F
Nozzle: 700 °F
Mold: 285 °F

### Measurements:

Mechanical properties were tested for all the formulations using injection molded 0.125 inch thick ASTM test specimens (4×4×0.125 in in plaques) for the Dynatup impact testing (D-3763: High Speed Puncture Multiaxial Impact).

The chemical resistance (environmental stress crack resistance) was evaluated by exposing flex bars under variable stress to methyl ethyl ketone for 24 hours. The time of exposure to methyl ethyl ketone was increased in the case where the materials did not show any breakage or crazing.

### Results:

The high speed puncture multiaxial impact (Dynatup Impact) data and tensile properties after heat aging are reported in Table 4:

**Table 4**

| | | **C22** | **E23** | **E24** | **E25** | **E26** |
|---|---|---|---|---|---|---|
| PPS (wt.%) | | 40 | 39.9 | 39.8 | 39.64 | 34.6 |
| PES (wt.%) | | 60 | 60 | 65 | 65 | 65 |
| K₂CO₃ (wt.%) | | | 0.1 | 0.2 | 0.36 | 0.4 |
| | | | | | | |
| D-3763 - Total Energy (ft-lbs) | | N.D.^{∗} | 1.47 | 0.87 | 25.5 | 47.2 |
| | | | | | | |

| | After 24 hours immersion in methyl ethyl ketone | | | | | |
|---|---|---|---|---|---|---|
| Appearance | | N.D. | crazing | crazing | --- | No effect |

N.D.^{∗} It was not possible to test blends without K₂CO₃ because it was not possible to produce the material according to the method described above. Excessive swelling and poor melt strength of the blend during extrusion made impossible the production of pellets, which are later used for injection molding of tensile and flexural specimens.

The introduction of K₂CO₃ unexpectedly enhanced the impact properties and the environmental stress crack resistance of blends of PPS with PES.

### Comparative Examples 27, 28, and 29 and Example 30

Comparative Example 27: blend PPS/PES 50/50 parts, for 5 min residence time.

Comparative Example 28: blend PPS/PES/rPES 45/45/10 parts, for 5 min residence time.

Comparative Example 29: blend PPS/PES/rPES/ZnO 45/45/10/2 parts, for 3 min residence time.

Example 30: blend PPS/PES/rPES/K₂CO₃ 45/45/10/0.5 parts, for 3 min residence time.

### Materials:

- PPS reference T 4G from DIC Corporation
- Veradel^{®} PESU 3600P from Solvay Specialty Polymers USA, LLC.
- Reactive poly(ether sulfone) (rPES): rPES synthesized according to a known process from 4,4'-dichlorodiphenyl sulfone, bisphenol S (in excess), potassium carbonate (in excess) in sulfolane as a solvent. The end-group titration of the rPES polymer gave:
   o concentration of hydroxyl end-groups [-OH] = 219 µeq/g
   o concentration of potassium phenoxide end-groups [-OK] = 60 µeq/g
   o concentration of chloro end-groups [-Cl] = 7 µeq/g
   o Number-average molecular weight (Mn) = 2,000,000/([-OH]+[-OK]+[-Cl]) = 7,000 g/mol
- Potassium carbonate K₂CO₃ UNID EF-80
- Zinc Oxide ZnO

### Compounding:

The blends were compounded in a DSM Xplore^{®} twin-screw (100 rpm) extruder heated at 380°C and equipped with a recirculation loop allowing control of residence time. The materials (total of 7g) were introduced simultaneously and mixed for a time (residence time) before being extruded into a strand.

### Measurements:

The torque needed to rotate the extruder screws was measured during blending. The torque correlates with the viscosity of the molten blend with a higher force indicating a higher viscosity.

The level of die swell was observed at the exit of the extruder and ranked as follows: -- very large die swell, - some die swell, +limited die swell, ++no die swell.

The thermal properties, i.e., melting temperature and crystallization temperature were determined by DSC.

The morphology of the blend was analyzed by scanning electron microscopy (SEM) and transmission electron microscopy (TEM) to give a maximum diameter of the dispersed phase.

### Results:

The blend compositions and measurements are shown below in Table 5. The morphology of the blends is shown in FIGS. **9-12**.

**Table 5**

| | **C27** | **C28** | **C29** | **E30** |
|---|---|---|---|---|
| PPS (parts) | 50 | 45 | 45 | 45 |
| PES (parts) | 50 | 45 | 45 | 45 |
| rPES (parts) | - | 10 | 10 | 10 |
| ZnO (parts) | - | - | 2 | - |
| K₂CO₃ (parts) | - | - | - | 0.5 |
| Residence time (min) | 5 | 5 | 3 | 3 |
| | | | | |
| Initial force (N) | 900 | 753 | 665 | 1,680 |
| Final force (N) | 1010 | 850 | 730 | 2,178 |
| | | | | |
| Die swell | -- | -- | - | ++ |
| | | | | |
| Tc (°C) | 239 | 236 | 236 | 224 |
| Tm (°C) | 281 | 280 | 283 | 279 |
| | | | | |

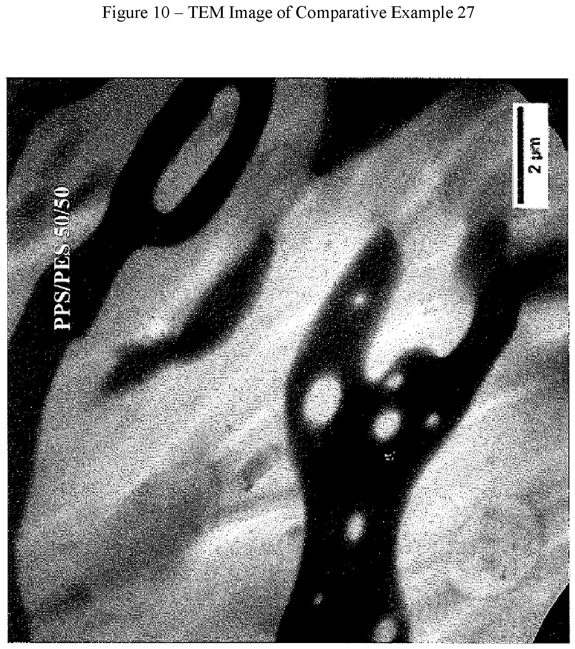

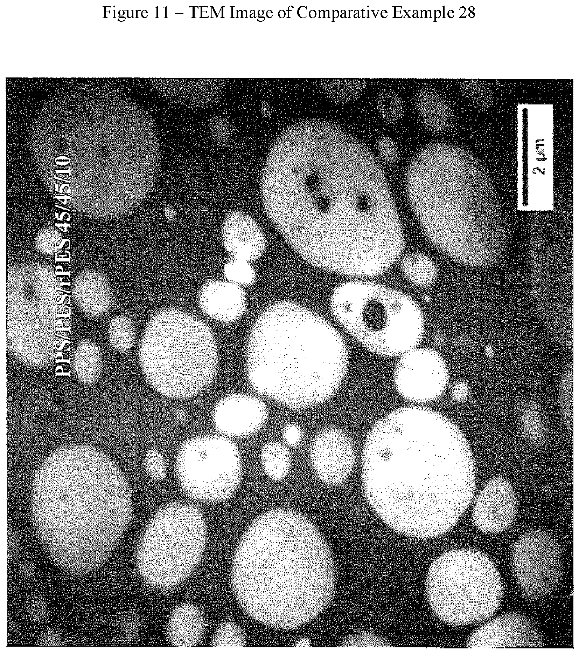

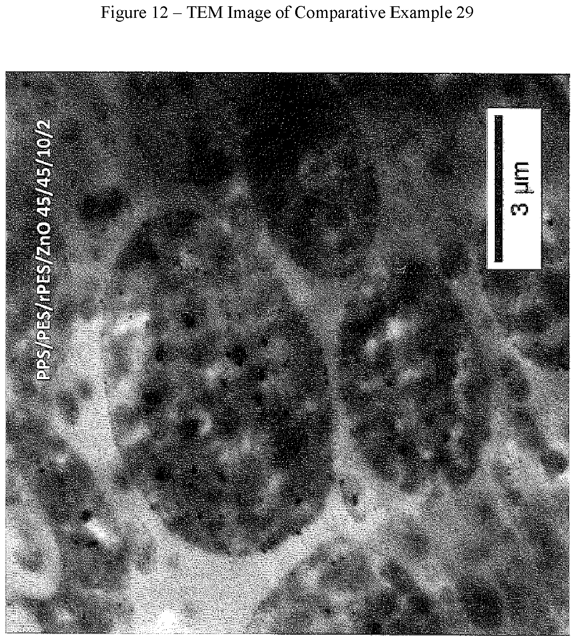

PPS and PES are clearly immiscible as shown in FIG. **10**. As shown in FIG. **11**, introduction of rPES (hydroxyl terminated PES) did not significantly compatibilize the polymers and very large die swell was observed. Moreover, as shown in FIG. **12**, the further addition of the base, ZnO, also did not result in a dramatic change in the morphology of the PPS and PES blend, and some die swell was still observed.

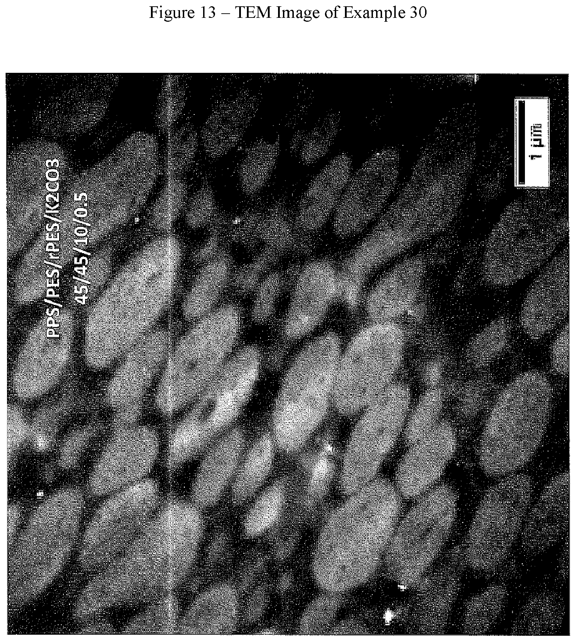

Surprisingly, however, when another base, K₂CO₃, was added to the PPS, PES and rPES polymer composition, good compatibilization of PPS and PES was observed, as shown by the dispersed phase of Example 30 (FIG. **13**). In addition, the polymer composition of Example 30 also unexpectedly exhibited no die swell, which is advantageous, for example, in extruding strands of a regular size.

## Claims

1. A polymer composition comprising:
i) a poly(*para*-phenylene sulfide) (PPS);
ii) at least one poly(aryl ether sulfone) (PAES); and
iii) about 0.05 to about 2 wt.% of at least one alkali metal carbonate, based on the total weight of polymers in the composition,
wherein:
- the weight ratio of the poly(para-phenylene sulfide) (PPS) to the at least one poly(aryl ether sulfone) (PAES) ranges from 0.2 to 20; and
- the at least one alkali metal carbonate comprises sodium carbonate, potassium carbonate or a combination thereof.

2. The polymer composition of claim 1, wherein the polymer composition does not comprise solvent(s) or comprises solvent(s) in an amount not exceeding 2 wt.% (based on the total weight of the composition).

3. The polymer composition of claim 1 or 2, wherein the poly(aryl ether sulfone) (PAES) is selected from the group consisting of a polysulfone (PSU), a polyethersulfone (PES) and a polyphenylsulfone (PPSU).

4. The polymer composition of any one of claims 1-3, wherein the at least one alkali metal carbonate comprises potassium carbonate.

5. The polymer composition of any one of claims 1-4, wherein the at least one alkali metal carbonate is potassium carbonate in an amount ranging from about 0.1 to about 0.5 wt.% based on the total weight of polymers in the polymer composition.

6. The polymer composition of any one of claims 1-5, wherein:
- the weight ratio of the poly(*para*-phenylene sulfide) (PPS) to the at least one poly(aryl ether sulfone) (PAES) ranges from 0.5 to 5, and
- the polymer composition includes 0.15 to 0.4 wt.% of the least one alkali metal carbonate, preferably potassium carbonate, based on the total weight of polymers in the composition.

7. The polymer composition of any one of claims 1-6, wherein the poly(*para*-phenylene sulfide) (PPS) is an acid-washed poly(*para*-phenylene sulfide) (PPS).

8. The polymer composition of any one of claims 1-7, further comprising an acid component having a pKa ≤ 7.5, preferably an inorganic acid component, more preferably NaH₂PO₄.

9. The polymer composition of any one of claims 1-8, wherein the polymer composition comprises:
- poly(*para*-phenylene sulfide) (PPS) and polysulfone (PSU),
- poly(para-phenylene sulfide) (PPS) and polyethersulfone (PES),
- poly(para-phenylene sulfide) (PPS) and polyphenylsulfone (PPSU),
- poly(para-phenylene sulfide) (PPS) and reactive polysulfone (rPSU),
- poly(para-phenylene sulfide) (PPS) and reactive polyethersulfone (rPES),
- poly(para-phenylene sulfide) (PPS) and reactive polyphenylsulfone (rPPSU),
- poly(para-phenylene sulfide) (PPS), polysulfone (PSU) and reactive polysulfone (rPSU),
- poly(para-phenylene sulfide) (PPS), polyethersulfone (PES) and reactive polyethersulfone (rPES), and
- poly(para-phenylene sulfide) (PPS), polyphenylsulfone (PPSU) and reactive polyphenylsulfone (rPPSU).

10. The polymer composition of any one of claims 1-9, wherein
i) the at least one poly(aryl ether sulfone) (PAES) is a reactive poly(aryl ether sulfone) (rPAES), or
ii) the polymer composition further comprises at least one reactive poly(aryl ether sulfone) (rPAES),
wherein the reactive poly(aryl ether sulfone) (rPAES) includes -OH end groups in a concentration greater than 5 µeq/g of the reactive poly(aryl ether sulfone) (rPAES).

11. The polymer composition of any one of claims 1 to 10, wherein the polymer composition includes either:
- a dispersed phase with a surface area per dispersed particle of ≤ about 4 µm², or
- a co-continuous phase wherein the average width of ribbons of a single polymer is less than or equal to about 2 µm, wherein the average width is calculated by taking 10 random measurements of the ribbon width, discarding the longest and shortest measurements, and dividing the sum of the remaining measurements by 8.

12. The polymer composition of any one of claims 1 to 11, wherein the polymer composition is free or substantially free of a polyetherimide (PEI) or free or substantially free of an epoxy, preferably free or substantially free of both a polyetherimide (PEI) and an epoxy.

13. A method of making a polymer composition comprising melt mixing:
i) a poly(*para*-phenylene sulfide) (PPS);
ii) at least one poly(aryl ether sulfone) (PAES); and
iii) about 0.05 to about 2 wt.% of at least one alkali metal carbonate, based on the total weight of polymers in the composition,
wherein:
- the weight ratio of the poly(*para*-phenylene sulfide) (PPS) to the at least one poly(aryl ether sulfone) (PAES) ranges from 0.2 to 20;
- the polymer composition is substantially free of solvent, preferably free of solvent; and
- the at least one alkali metal carbonate comprises sodium carbonate, potassium carbonate or a combination thereof.

14. The method of claim 13, wherein the method comprises:
(a1) contacting the poly(*para*-phenylene sulfide) (PPS), the at least one poly(aryl ether sulfone) (PAES), and the alkali metal carbonate to form a first initial mixture;
(a2) contacting the poly(*para*-phenylene sulfide) (PPS) with the alkali metal carbonate to form a second initial mixture, and subsequently contacting the second initial mixture with the at least one poly(aryl ether sulfone) (PAES) to form a second mixture;
(a3) contacting the at least one poly(aryl ether sulfone) (PAES) with the alkali metal carbonate to form a third initial mixture, and subsequently contacting the third initial mixture with the poly(*para*-phenylene sulfide) (PPS) to form a third mixture; or
(a4) contacting the poly(*para*-phenylene sulfide) (PPS) and the at least one poly(aryl ether sulfone) (PAES) to form a fourth initial mixture and subsequently contacting the fourth initial mixture with the alkali metal carbonate to form a forth mixture; and
(b) optionally contacting the first initial mixture, the second mixture, the third mixture, or the fourth mixture with an acid component having a pKa ≤ 7.5.

15. A shaped article comprising the polymer composition of any one of claims 1 to 12.

## Patentansprüche

1. Polymerzusammensetzung, umfassend:
i) ein Poly(para-phenylensulfid) (PPS);
ii) mindestens ein Poly(arylethersulfon) (PAES) und
iii) etwa 0,05 bis etwa 2 Gew.-% mindestens eines Alkalimetallcarbonats, bezogen auf das Gesamtgewicht von Polymeren in der Zusammensetzung,
wobei:
- das Gewichtsverhältnis des Poly(para-phenylensulfid)s (PPS) zu dem mindestens einen Poly-(arylethersulfon) (PAES) im Bereich von 0,2 bis 20 liegt und
- das mindestens eine Alkalimetallcarbonat Natriumcarbonat, Kaliumcarbonat oder eine Kombination davon umfasst.

2. Polymerzusammensetzung nach Anspruch 1, wobei die Polymerzusammensetzung kein Lösungsmittel umfasst oder Lösungsmittel in einer Menge von nicht mehr als 2 Gew.-% (bezogen auf das Gesamtgewicht der Zusammensetzung) umfasst.

3. Polymerzusammensetzung nach Anspruch 1 oder 2, wobei das Poly(arylethersulfon) (PAES) aus der Gruppe bestehend aus einem Polysulfon (PSU), einem Polyethersulfon (PES) und einen Polyphenylsulfon (PPSU) ausgewählt ist.

4. Polymerzusammensetzung nach einem der Ansprüche 1-3, wobei das mindestens eine Alkalimetallcarbonat Kaliumcarbonat umfasst.

5. Polymerzusammensetzung nach einem der Ansprüche 1-4, wobei es sich bei das mindestens einen Alkalimetallcarbonat um Kaliumcarbonat in einer Menge im Bereich von etwa 0,1 bis etwa 0,5 Gew.-%, bezogen auf das Gesamtgewicht von Polymeren in der Polymerzusammensetzung, handelt.

6. Polymerzusammensetzung nach einem der Ansprüche 1-5, wobei:
- das Gewichtsverhältnis des Poly(para-phenylensulfid)s (PPS) zu dem mindestens einen Poly-(arylethersulfon) (PAES) im Bereich von 0,5 bis 5 liegt und
- die Polymerzusammensetzung 0,15 bis 0,4 Gew.-% des mindestens einen Alkalimetallcarbonats, vorzugsweise Kaliumcarbonat, bezogen auf das Gesamtgewicht von Polymeren in der Zusammensetzung, enthält.

7. Polymerzusammensetzung nach einem der Ansprüche 1 bis 6, wobei es sich bei dem Poly(para-phenylensulfid) (PPS) um ein mit Säure gewaschenes Poly(para-phenylensulfid) (PPS) handelt.

8. Polymerzusammensetzung nach einem der Ansprüche 1-7, ferner umfassend eine Säurekomponente mit einem pKa ≤ 7,5, vorzugsweise eine anorganische Säurekomponente, stärker bevorzugt NaH₂PO₄.

9. Polymerzusammensetzung nach einem der Ansprüche 1-8, wobei die Polymerzusammensetzung Folgendes umfasst:
- Poly(para-phenylensulfid) (PPS) und Polysulfon (PSU),
- Poly(para-phenylensulfid) (PPS) und Polyethersulfon (PES),
- Poly(*para*-phenylensulfid) (PPS) und Polyphenylsulfon (PPSU),
- Poly(*para*-phenylensulfid) (PPS) und reaktives Polysulfon (rPSU),
- Poly(*para*-phenylensulfid) (PPS) und reaktives Polyethersulfon (rPES),
- Poly(*para*-phenylensulfid) (PPS) und reaktives Polyphenylsulfon (rPPSU),
- Poly(*para*-phenylensulfid) (PPS), Polysulfon (PSU) und reaktives Polysulfon (rPSU),
- Poly(*para*-phenylensulfid) (PPS), Polyethersulfon (PES) und reaktives Polyethersulfon (rPES) und
- Poly(*para*-phenylensulfid) (PPS), Polyphenylsulfon (PPSU) und reaktives Polyphenylsulfon (rPPSU).

10. Polymerzusammensetzung nach einem der Ansprüche 1-9, wobei
i) es sich bei dem mindestens einen Poly-(arylethersulfon) (PAES) um ein reaktives Poly-(arylethersulfon) (rPAES) handelt oder
ii) die Polymerzusammensetzung ferner mindestens ein reaktives Poly(arylethersulfon) (rPAES) umfasst, wobei das reaktive Poly(arylethersulfon) (rPAES) -OH-Endgruppen in einer Konzentration von mehr als 5 µeq/g des reaktiven Poly(arylethersulfon)s (rPAES) enthält.

11. Polymerzusammensetzung nach einem der Ansprüche 1 bis 10, wobei die Polymerzusammensetzung entweder
- eine dispergierte Phase mit einer Oberfläche pro dispergiertem Partikel von ≤ etwa 4 µm² oder
- eine cokontinuierliche Phase, wobei die durchschnittliche Breite von Bändern eines einzigen Polymers kleiner oder gleich etwa 2 µm ist, wobei die durchschnittliche Breite durch Vornehmen von 10 stichprobenartigen Messungen der Bandbreite, Verwerfen der längsten und kürzesten Messung und Dividieren der Summe der verbliebenen Messungen durch 8 berechnet wird, enthält.

12. Polymerzusammensetzung nach einem der Ansprüche 1 bis 11, wobei die Polymerzusammensetzung frei oder weitgehend frei von einem Polyetherimid (PEI) oder frei oder weitgehend frei von einem Epoxidharz, vorzugsweise frei oder weitgehend frei von sowohl einem Polyetherimid (PEI) als auch einem Epoxidharz, ist.

13. Verfahren zur Herstellung einer Polymerzusammensetzung, umfassend das Schmelzemischen von:
i) einem Poly(para-phenylensulfid) (PPS);
ii) mindestens einem Poly(arylethersulfon) (PAES) und
iii) etwa 0,05 bis etwa 2 Gew.-% mindestens eines Alkalimetallcarbonats, bezogen auf das Gesamtgewicht von Polymeren in der Zusammensetzung,
wobei:
- das Gewichtsverhältnis des Poly(para-phenylensulfid) (PPS) zu dem mindestens einen Poly-(arylethersulfon) (PAES) im Bereich von 0,2 bis 20 liegt;
- die Polymerzusammensetzung weitgehend frei von Lösungsmittel, vorzugsweise frei von Lösungsmittel, ist und
- das mindestens eine Alkalimetallcarbonat Natriumcarbonat, Kaliumcarbonat oder eine Kombination davon umfasst.

14. Verfahren nach Anspruch 13, wobei das Verfahren Folgendes umfasst:
(a1) Inkontaktbringen des Poly(para-phenylensulfid) (PPS), des mindestens einen Poly-(arylethersulfon) (PAES) und des Alkalimetallcarbonat zur Bildung einer ersten anfänglichen Mischung;
(a2) Inkontaktbringen des Poly(para-phenylensulfid) (PPS) mit dem Alkalimetallcarbonat zur Bildung einer zweiten anfänglichen Mischung und anschließendes Inkontaktbringen der zweiten anfänglichen Mischung mit dem mindestens einen Poly(arylethersulfon) (PAES) zur Bildung der zweiten Mischung;
(a3) Inkontaktbringen des mindestens einen Poly(arylethersulfon) (PAES) mit dem Alkalimetallcarbonat zur Bildung einer dritten anfänglichen Mischung und anschließendes Inkontaktbringen der dritten anfänglichen Mischung mit dem Poly(*para*-phenylensulfid) (PPS) zur Bildung einer dritten Mischung; oder
(a4) Inkontaktbringen des Poly(*para*-phenylensulfid) (PPS) und des mindestens einen Poly-(arylethersulfon) (PAES) zur Bildung einer vierten anfänglichen Mischung und anschließendes Inkontaktbringen der vierten anfänglichen Mischung mit dem Alkalimetallcarbonat zur Bildung einer vierten Mischung und
(b) gegebenenfalls Inkontaktbringen der ersten anfänglichen Mischung, der zweiten Mischung, der dritten Mischung oder der vierten Mischung mit einer Säurekomponente mit einem pKa ≤ 7,5.

15. Geformter Gegenstand, umfassend die Polymerzusammensetzung nach einem der Ansprüche 1 bis 12.

## Revendications

1. Composition de polymère comprenant :
i) un poly(sulfure de *para*-phénylène) (PPS) ;
ii) au moins une poly(aryléthersulfone) (PAES) ; et
iii) environ 0,05 à environ 2 % en poids d'au moins un carbonate de métal alcalin, sur la base du poids total de polymères dans la composition,
- le rapport en poids du poly(sulfure de *para-*phénylène) (PPS) à l'au moins une poly(aryléthersulfone) (PAES) se situant dans la plage de 0,2 à 20 ; et
- l'au moins un carbonate de métal alcalin comprenant le carbonate de sodium, le carbonate de potassium ou une combinaison correspondante.

2. Composition de polymère selon la revendication 1, la composition de polymère ne comprenant pas de solvant (s) ou comprenant un ou des solvant (s) en une quantité n'excédant pas 2 % en poids (sur la base du poids total de la composition).

3. Composition de polymère selon la revendication 1 ou 2, la poly(aryléthersulfone) (PAES) étant choisie dans le groupe constitué par une polysulfone (PSU), une polyéthersulfone (PES) et une polyphénylsulfone (PPSU).

4. Composition de polymère selon l'une quelconque des revendications 1 à 3, l'au moins un carbonate de métal alcalin comprenant du carbonate de potassium.

5. Composition de polymère selon l'une quelconque des revendications 1 à 4, l'au moins un carbonate de métal alcalin étant du carbonate de potassium en une quantité allant d'environ 0,1 à environ 0,5 % en poids sur la base du poids total de polymères dans la composition de polymère.

6. Composition de polymère selon l'une quelconque des revendications 1 à 5,
- le rapport en poids du poly(sulfure de *para-*phénylène) (PPS) à l'au moins une poly(aryléthersulfone) (PAES) se situant dans la plage de 0,5 à 5, et
- la composition de polymère comprenant 0,15 à 0,4 % en poids de l'au moins un carbonate de métal alcalin, préférablement du carbonate de potassium, sur la base du poids total de polymères dans la composition.

7. Composition de polymère selon l'une quelconque des revendications 1 à 6, le poly(sulfure de para-phénylène) (PPS) étant un poly(sulfure de para-phénylène) (PPS) lavé à l'acide.

8. Composition de polymère selon l'une quelconque des revendications 1 à 7, comprenant en outre un composant acide ayant un pKa ≤ 7,5, préférablement un composant acide inorganique, plus préférablement NaH₂PO₄.

9. Composition de polymère selon l'une quelconque des revendications 1 à 8, la composition de polymère comprenant :
- un poly(sulfure de para-phénylène) (PPS) et une polysulfone (PSU),
- un poly(sulfure de para-phénylène) (PPS) et une polyéthersulfone (PES),
- un poly(sulfure de para-phénylène) (PPS) et une polyphénylsulfone (PPSU),
- un poly(sulfure de para-phénylène) (PPS) et une polysulfone réactive (rPSU),
- un poly(sulfure de para-phénylène) (PPS) et une polyéthersulfone réactive (rPES),
- un poly(sulfure de para-phénylène) (PPS) et une polyphénylsulfone réactive (rPPSU),
- un poly(sulfure de para-phénylène) (PPS), une polysulfone (PSU) et une polysulfone réactive (rPSU),
- un poly(sulfure de para-phénylène) (PPS), une polyéthersulfone (PES) et une polyéthersulfone réactive (rPES),
- un poly(sulfure de para-phénylène) (PPS), une polyphénylsulfone (PPSU) et une polyphénylsulfone réactive (rPPSU).

10. Composition de polymère selon l'une quelconque des revendications 1 à 9,
i) l'au moins une poly(aryléthersulfone) (PAES) étant une poly(aryléthersulfone) réactive (rPAES), ou
ii) la composition de polymère comprenant en outre au moins une poly(aryléthersulfone) réactive (rPAES), la poly(aryléthersulfone) réactive (rPAES) comprenant des groupes terminaux -OH en une concentration supérieure à 5 µéq/g de la poly(aryléthersulfone) réactive (rPAES).

11. Composition de polymère selon l'une quelconque des revendications 1 à 10, la composition de polymère comprenant soit :
- une phase dispersée dotée d'une superficie par particule dispersée de ≤ environ 4 µm², ou
- une phase co-continue, la largeur moyenne de rubans d'un seul polymère étant inférieure ou égale à environ 2 µm, la largeur moyenne étant calculée en prenant 10 mesures aléatoires de la largeur du ruban, en éliminant les plus longue et plus courte mesures, et en divisant la somme des mesures restantes par 8.

12. Composition de polymère selon l'une quelconque des revendications 1 à 11, la composition de polymère étant exempte ou sensiblement exempte d'un polyétherimide (PEI) ou exempte ou sensiblement exempte d'un époxy, préférablement exempte ou sensiblement exempte à la fois d'un polyétherimide (PEI) et d'un époxy.

13. Procédé de préparation d'une composition de polymère comprenant le mélange à l'état fondu :
i) d'un poly(sulfure de *para*-phénylène) (PPS) ;
ii) d'au moins une poly(aryléthersulfone) (PAES) ; et
iii) d'environ 0,05 à environ 2 % en poids d'au moins un carbonate de métal alcalin, sur la base du poids total de polymères dans la composition,
- le rapport en poids du poly(sulfure de *para-*phénylène) (PPS) sur l'au moins une poly(aryléthersulfone) (PAES) se situant dans la plage de 0,2 à 20 ;
- la composition de polymère étant sensiblement exempte de solvant, préférablement exempte de solvant ; et
- l'au moins un carbonate de métal alcalin comprenant du carbonate de sodium, du carbonate de potassium ou une combinaison correspondante.

14. Procédé selon la revendication 13, le procédé comprenant :
(a1) la mise en contact du poly(sulfure de *para-*phénylène) (PPS), de l'au moins une poly(aryléthersulfone) (PAES), et du carbonate de métal alcalin pour former un premier mélange initial ;
(a2) la mise en contact du poly(sulfure de *para-*phénylène) (PPS) avec le carbonate de métal alcalin pour former un deuxième mélange initial, et subséquemment la mise en contact du deuxième mélange initial avec l'au moins une poly(aryléthersulfone) (PAES) pour former un deuxième mélange ;
(a3) la mise en contact de l'au moins une poly(aryléthersulfone) (PAES) avec le carbonate de métal alcalin pour former un troisième mélange initial, et subséquemment la mise en contact du troisième mélange initial avec le poly(sulfure de para-phénylène) (PPS) pour former un troisième mélange ; ou
(a4) la mise en contact du poly(sulfure de *para-*phénylène) (PPS) et de l'au moins une poly(aryléthersulfone) (PAES) pour former un quatrième mélange initial et subséquemment la mise en contact du quatrième mélange initial avec le carbonate de métal alcalin pour former un quatrième mélange ; et
(b) éventuellement la mise en contact du premier mélange initial, du deuxième mélange, du troisième mélange, ou du quatrième mélange avec un composant de type acide possédant un pKa ≤ 7,5.

15. Article façonné comprenant la composition de polymère selon l'une quelconque des revendications 1 à 12.
